# EUROPEAN PATENT APPLICATION

(11) **EP 4 002 718 A1**
(43) Date of publication of application: **25.05.2022**
(21) Application number: 20207548.7
(22) Date of filing: 13.11.2020
(51) Int. Cl.: H04B 7/185

(54) **SPACECRAFT COMMUNICATION SYSTEM**

(71) Applicant: SSC Space UK Limited, Cambridge, Cambridgeshire CB4 0WZ (GB)
(72) Inventor: HATZIATHANASIOU, Iraklis, Bicester, Oxfordshire OX26 2DA (GB)
(74) Representative: Brann AB

(57) **Abstract**

A link system (100) for a spacecraft (10) comprises control and communication circuitry and is configured to communicate with subsystems (12) in the spacecraft (10) independent of an on-board computer (102) and configured to manage communication between the subsystems (12) and external entities (150, 160). The link system (100) is configured to determine that an anomaly has occurred in functionality of the on-board computer (102) and/or at least one subsystem (12). As a consequence of the determination that an anomaly has occurred, the link system (100) initiates a recovery procedure that comprises enabling the external entity (150, 160) to execute recovery actions in relation to the on-board computer (102) and/or at least one subsystem (12).

## Description

### TECHNICAL FIELD

Embodiments herein relate to a link system for a spacecraft, corresponding methods as well as computer programs and carriers of such computer programs.

### BACKGROUND

An inherent characteristic of a typical unmanned spacecraft is that once the spacecraft has been launched it is impractical and expensive to replace or repair malfunctioning hardware components onboard the spacecraft, or even to optimize the performance of spacecraft subsystems and the spacecraft itself.

Of course, much effort is spent on configuring the hardware components prior to launch such that they are as tolerant as possible to faults. The only way to replace a faulty hardware component has been to rely on redundancy of critical components. Redundancy is typically an expensive alternative and it has therefore been important to configure prior art spacecraft with on-board computers that, at least to some extent, are capable of handling fault conditions in hardware components that operate the spacecraft and perform, e.g., collecting of scientific data. However, in scenarios wherein the on-board computer itself fail to perform as desired it may be impossible to recover full functionality of the spacecraft.

### SUMMARY

In view of the above, an object of the present disclosure is to overcome drawbacks related to handling function anomalies and fault conditions in spacecraft hardware components.

Such an object is achieved in a first aspect by a link system for a spacecraft. The spacecraft comprises a plurality of subsystems interconnected with each other, an on-board computer configured to communicate with the subsystems and to at least convey data between the subsystems and the link system. A wireless communication system is configured to communicate data between the spacecraft and at least one external entity such as a ground station and/or another spacecraft. The link system comprises control and communication circuitry and the link system is configured to communicate with the subsystems independent of the on-board computer and configured to manage communication between the subsystems and the external entity via the wireless communication system. The link system is further configured to determine that an anomaly has occurred in functionality of the on-board computer and/or at least one subsystem among the plurality of subsystems. As a consequence of the determination that an anomaly has occurred, the link system initiates a recovery procedure that comprises enabling the external entity to perform recovery actions in relation to the on-board computer and/or at least one subsystem among the plurality of subsystems.

In other words, such a link system connects directly to the spacecraft subsystems. In doing so, fault conditions can be overcome in that the link system allows an external entity direct communication with any of the subsystems on the spacecraft. Moreover, in such a configuration with a link system configured to communicate with the subsystems independent of the on-board computer, the connectivity intelligence is no longer integrated only in the on-board-computer, thereby providing an additional advantage of redundancy without the need of configuring the spacecraft with a backup on-board computer as such.

For example, the functional conditions programmed in the on-board-computer are based on predicted performance of the system. As such, if/when unpredicted conditions occur, it is not always possible to be managed by the on-board-computer without external intervention. However, the link system described herein overcomes drawbacks associated with reduced performance and/or complete loss of functionality that may follow from such unpredicted conditions.

The determination that an anomaly has occurred may vary. For example, it may comprise any of the following, alone or in combination:
- receiving, from the external entity, information that the anomaly in functionality of the on-board computer has occurred,
- detecting that the anomaly in functionality of the on-board computer has occurred,
- determining that a limitation of the on-board computer to communicate with at least one subsystem has occurred, and
- determining that a limitation of the on-board computer to execute a scheduled management task associated with at least one subsystem has occurred.

That is, anomalies may be determined in various ways, for example by the external entity. As will be exemplified further herein, the link system may be configured to communicate and operate independently of the on-board computer so that if an error occurs in the on-board computer, it is still possible for the external entity to manually manage the spacecraft by communicating directly with the subsystems. In some cases, it is possible to use the link system to trigger a recovery procedure designed to bring the spacecraft back to nominal functionality. However, if recovery is not possible, and depending on the nature of the failure, the external entity may still be able to continue operating the spacecraft remotely and manage the system.

In other words, the anomaly may be in the on-board computer or in any of the subsystems. In some cases, the anomaly may not have been detected by the on-board computer but detected by the link system. In some scenarios, parameters in the subsystems may have been tweaked, e.g. as a consequence of operator actions in order to optimise functional performance or even just to extend the life of the spacecraft, which in turn may lead to an anomaly at a later point in time. Furthermore, such embodiments may overcome drawbacks associated with a scenario wherein the on-board computer is unable to detect a malfunction or non-optimum behaviour of a subsystem that may be due to inherent logic limitations in the on-board computer rather than an outright malfunction.

With regard to the recovery procedure initiated by the link system, it may comprise receiving, from the external entity, at least one command to execute a restart procedure of the on-board computer and then executing a restart procedure of the on-board computer according to the received at least one command.

Such a recovery procedure is simple and in may be a preferred first and easiest alternative to recover after an anomaly has been determined.

The recovery procedure initiated by the link system may also or alternatively comprise enabling direct communication between the external entity and at least one subsystem.

Such enabling of direct communication between the external entity and at least one subsystem may comprise establishing a communication channel between the link system and the at least one subsystem and then transmitting, to the external entity, information configured to enable the external entity to obtain access to the established channel. The external entity is thereby enabled to communicate with the at least one subsystem via the channel.

In other words, the link system may in such embodiments be considered as performing a router function in relation to the external entity when communicating with one or more subsystems. Such embodiments are advantageous in that they enable a direct communication channel for use by the external entity, bypassing the on-board computer and thereby also avoiding any problems related to the determined anomaly.

The recovery procedure initiated by the link system may in some embodiments comprise receiving, from the external entity, a request for telemetry data from at least one subsystem. Telemetry data may then be obtained from the at least one subsystem, and the obtained telemetry data may then be transmitted to the external entity.

Such embodiments are advantageous in that they facilitate diagnostics of the determined anomaly. For example, it is possible for the external entity to modify operational parameters of the misbehaving subsystem in order to achieve more optimum performance.

In another aspect, there is provided a method performed by a link system for a spacecraft. The spacecraft comprises a plurality of subsystems interconnected with each other, an on-board computer configured to communicate with the subsystems and to at least convey data between the subsystems and the link system, and a wireless communication system configured to communicate data between the spacecraft and at least one external entity. The link system comprises control and communication circuitry that performs the steps of:
- determining that an anomaly has occurred in functionality of the on-board computer and/or at least one subsystem among the plurality of subsystems, and
- as a consequence of the determination that an anomaly has occurred, initiating a recovery procedure that comprises enabling the external entity to perform recovery actions in relation to the on-board computer and/or at least one subsystem among the plurality of subsystems.

In a further aspect, there is provided a computer program comprising instructions which, when executed on at least one processor in a computer system, cause the computer system to carry out a method as summarized above.

In yet a further aspect, there is provided a carrier, comprising the computer program as summarized above, wherein the carrier is one of an electronic signal, an optical signal, a radio signal and a computer readable storage medium.

These further aspects and embodiments of these further aspects provide the same effects and advantages as summarized above in connection with the method of the first aspect.

### BRIEF DESCRIPTION OF THE DRAWINGS

Figure 1 is a schematically illustrated spacecraft communication system,
figures 2a-f are flowcharts of methods, and
figure 3 schematically illustrates a link computer system.

### DETAILED DESCRIPTION

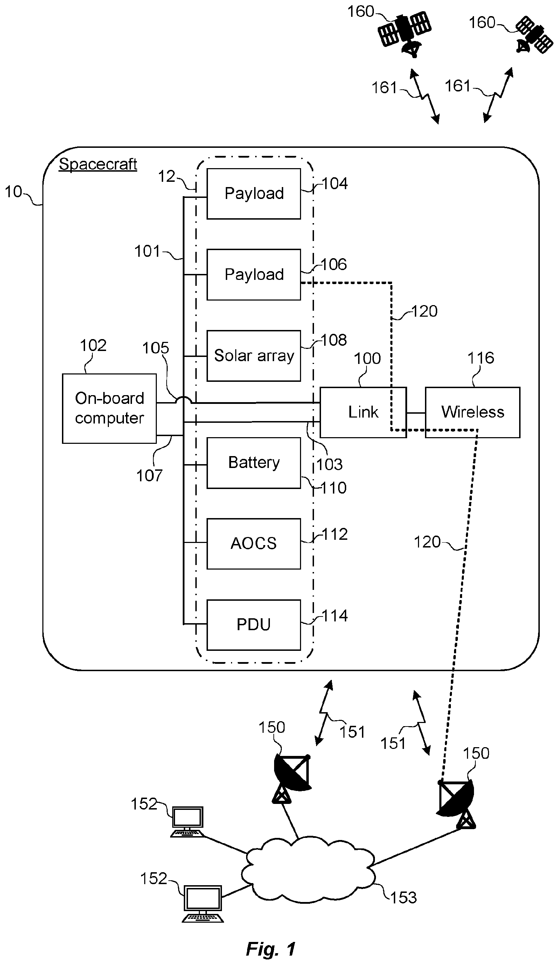

With reference to **figure 1****,** a spacecraft communication system comprises a plurality of entities that are configured to communicate with each other in a wireless manner. A spacecraft 10 is configured to communicate with entities that are external to the spacecraft 10. The external entities are exemplified in figure 1 by a plurality of terrestrial entities including ground stations 150 and by one or more other spacecraft 160. Communication between the spacecraft 10 and the ground stations 150 may take place via a wireless communication interface 151 of a first type and communication between the spacecraft 10 and the spacecraft 160 may take place via a wireless communication interface 161 of a second type. A terrestrial network 153 interconnect the ground stations 150 and other communicating entities as exemplified by operator systems 152.

The spacecraft comprises a a plurality of subsystems 12 interconnected with each other, an on-board computer 102 configured to communicate with the subsystems 12 and to at least convey data between the subsystems 12 and a link system 100, which will be described in some detail below. A wireless communication system 116 is configured to communicate data between the spacecraft 10 and at least one external entity 150, 160. The wireless communication system 116 may be a radio communication system. For example, the wireless communication system 116 may be configured to communicate with at least one external entity in the form of a ground station 150 in a fixed-satellite service system (FSS). Similarly, the wireless communication system 116 may be configured to communicate with at least one external entity in the form of another spacecraft 160 in an inter-satellite service system, ISS. The International Telecommunication Union (ITU) defines such communication systems in so-called radio regulations (RR). For example, FSS is regulated in RR 1.21 and ISS is regulated in RR 1.22. The wireless communication system 116 may also or alternatively be configured to communicate by means of optical means, e.g. laser communication circuitry.

Specific examples of functionality of the subsystems 12 include payloads (scientific instruments etc.) 104, 106, solar arrays 108, a battery system 110, an attitude and orbital control system (AOCS) 112 and a power distribution unit 114. A telemetry, tracking and command (TT&C) subsystem may also be present as a separate subsystem (not illustrated in figure 1). The subsystems 12 are interconnected via a communications bus 101 and the on-board computer 102 is configured to manage operations of the spacecraft 10. The on-board computer 102 is responsible for managing operations of the spacecraft 10 and to communicate with the link system 100.

It is to be noted that the communications bus 101 is one example of communication means suitable in the present context. Examples of bus configurations include SpaceWire and Controller Area Network (CAN) bus. However, as the skilled person will realize other non-bus configurations may be utilized, such as mesh or star network topologies.

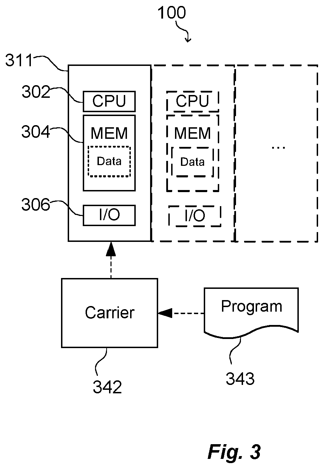

The link system 100 is configured to communicate with the subsystems 12 independent of the on-board computer 102 and configured to manage communication between the subsystems 12 and one or more of the external entities 150, 160 via the wireless communication system 116. The link system 100 may comprise at least one computer system 311 as exemplified in figure 3 that comprises control and communication circuitry in the form of a processor 302, memory 304 and input/output circuitry 306. The fact that the link system 100 is configured to communicate with the subsystems 12 independent of the on-board computer 102 is characterized by an ability to implement routing functions for establishing a direct communications channel between an external entity and any of the spacecraft subsystems, or the initiation of communications with the earth station when it determines that the satellite passes over a ground antenna.

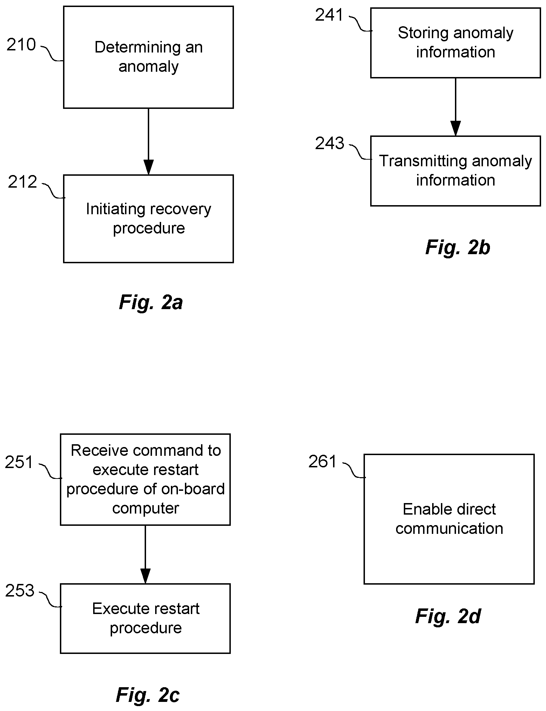

Now with reference also to **figure 2a****,** the control and communication circuitry of the link system 100 may be configured to perform a number of actions as follows:

### Action 210

A determination is made that an anomaly has occurred in functionality of the on-board computer 102 and/or in functionality of at least one subsystem among the plurality of subsystems 12.

The determination in action 210 that an anomaly has occurred may comprise receiving, from the external entity 150, 160, information that the anomaly has occurred. Alternatively, the determination in action 210 that an anomaly has occurred may comprise detecting that the anomaly has occurred. In other words, the anomaly may be detected by the external entity 150, 160 and then the external entity 150, 160 informs the link system 100 in the spacecraft 10 that the anomaly has occurred; or the anomaly is determined in that the link system 100 itself detects the anomaly.

Regarding the character of the anomaly, in some embodiments the determination that an anomaly has occurred comprises determining that a limitation of the on-board computer 102 to communicate with at least one subsystem among the plurality of subsystems 12 has occurred. In some embodiments, the determination that an anomaly has occurred comprises determining that a limitation of the on-board computer 102 to execute a scheduled management task associated with at least one subsystem among the plurality of subsystems 12 has occurred. In some embodiments, the determination that an anomaly has occurred comprises determining a limitation of the on-board computer 102 to determine non optimum operational parameters for any of the subsystems 12. In some embodiments, the determination that an anomaly has occurred comprises determining a limitation of the on-board computer 102 to recognise any unpredicted condition in the system behaviour.

### Action 212

As a consequence of the determination in action 210 that an anomaly has occurred, a recovery procedure is initiated that comprises enabling the external entity 150, 160 to perform recovery actions in relation to the on-board computer 102 and/or in relation to at least one subsystem among the plurality of subsystems 12.

As will be exemplified herein, the recovery procedure depends on the nature of the anomaly. The most common anomaly is related to the radiation environment of the spacecraft, especially during periods of solar flares, when a high energy particle hits an active silicon component, i.e. a field-programmable gate array (FPGA) or a processor and causes a latch up event or a single event effect/single event upset (SEE/SEU). In such cases, the recovery procedure may be realized through the power system of the spacecraft by limiting the amount of current supplied to individual subsystems (or the on-board computer) and gradually returning the spacecraft in nominal operations. Restarting the processor without removing the power altogether does not clear a latch up condition. In some cases, the damage from an event where a high energy particle hits an active silicon component is so extensive that recovery is no longer possible. In those cases, the only option is to completely shut down the malfunctioning system and manually recover functionality in the areas that are not damaged.

In some embodiments, the link system 100 is configured such that the recovery procedure initiated by the link system 100 comprises the following actions, as illustrated in **figure 2b****:**

### Action 241

Anomaly information pertaining to the anomaly in functionality of the on-board computer 102 is stored, for example stored in a memory 304 as exemplified in figure 3.

### Action 243

The anomaly information is then transmitted to the external entity 150, 160.

In some embodiments, the link system 100 is configured such that the recovery procedure initiated by the link system 100 comprises the following actions, as illustrated in **figure 2c****:**

### Action 251

The link system 100 receives, from the external entity 150, 160, at least one command to execute a restart procedure of the on-board computer 102.

### Action 253

A restart procedure of the on-board computer 102 is executed according to the received at least one command. For example, as mentioned above, the recovery procedure may be realized through the power system of the spacecraft by limiting the amount of current supplied to the on-board computer (or individual subsystems) and gradually returning the spacecraft in nominal operations. Restarting the processor without removing the power altogether does not clear a latch up condition.

In some embodiments, the link system 100 is configured such that the recovery procedure initiated by the link system 100 comprises the following action, as illustrated in **figure 2d****:**

### Action 261

Direct communication is enabled between the external entity 150, 160 and at least one subsystem among the plurality of subsystems 12.

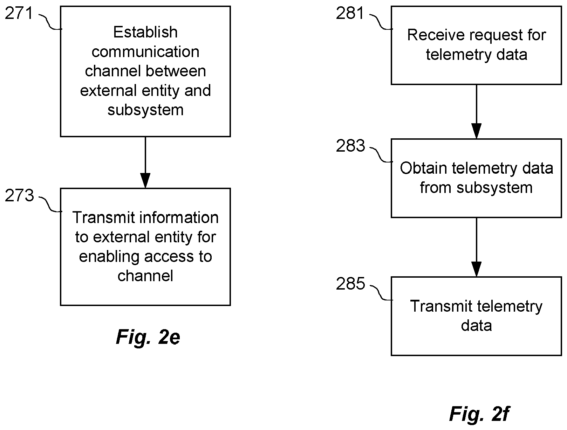

In some embodiments as illustrated in **figure 2e****,** the link system 100 is configured such that the enabling in action 263 of direct communication between the external entity 150, 160 and at least one subsystem among the plurality of subsystems 12 comprises the following actions:

### Action 271

A communication channel 120 is established between the link system 100 and the at least one subsystem among the plurality of subsystems 12.

### Action 273

Transmission is made, to the external entity 150, 160, of information configured to enable the external entity 150, 160 to obtain access to the established channel 120 and thereby enabling the external entity 150, 160 to communicate with the at least one subsystem among the plurality of subsystems 12 via the channel 120.

In other words, the link system may in such embodiments be considered as performing a router function in relation to the external entity when communicating with one or more subsystems.

In some embodiments as illustrated in **figure 2f****,** the link system 100 is configured such that the recovery procedure initiated in action 212 comprises the following actions:

### Action 281

The link system 100 receives, from the external entity 150, 160, a request for telemetry data from at least one subsystem among the plurality of subsystems 12.

### Action 283

Telemetry data is obtained from the at least one subsystem among the plurality of subsystems 12.

### Action 285

The obtained telemetry data is transmitted, to the external entity 150, 160.

As illustrated in figure 3, a computer program 343 may comprise instructions which, when executed on at least one processor 302 in the spacecraft link system 100, cause the link system 100 to carry out a method as exemplified by the actions described above. Furthermore, as illustrated in figure 3, a carrier 342, comprising such a computer program 343, may be one of an electronic signal, an optical signal, a radio signal and a computer readable storage medium.

From the above it can be summarized that the link system 100 may be in the form of a computer apparatus installed in the spacecraft 10 and a purpose is to manage all forms of communications between the spacecraft 10 and any of the nodes of the network (i.e. the external entities 150, 160). Although several functions of the link system 100 has been exemplified above, it may further be configured to fulfil similar and other functions as follows, e.g. in combination with the features described above in connection with figures 1 to 3:
- Prioritise and manage connectivity needs of the spacecraft 10 to the network and vice versa.
- Serve communications needs of the spacecraft 10 payload(s) 104, 106 and/or any data handling unit in the spacecraft 10.
- Manage routing of communications between network (i.e. external entities 150, 160), spacecraft on-board computer 102, payload(s) 104, 106 or any of the spacecraft subsystems 12 connected to the link system 100.
- Negotiate availability and timing of spacecraft to network (i.e. external entities 150, 160) connection with the interfaces in the network. The spacecraft orbits earth at a certain rate. In Low Earth Orbits, this is usually every 90 mins. As a result, and depending on the spacecraft trajectory, it is only going over a ground antenna at certain times. As a result, the spacecraft can only connect to the network when it is flying over an earth station and has access to the antenna on the ground. The antenna on the ground has to point towards the satellite and track its orbit to maintain communications.
- Communicate the spacecraft orbital parameters (e.g. position, velocity, attitude....) to the network (i.e. external entities 150, 160) in order to facilitate the estimation of available opportunities to communicate with any of the external entities 150, 160. As the spacecraft orbits earth, it only passes over an antenna on the ground at certain times. The spacecraft operators determine the time that the spacecraft will be going over the earth station and negotiate the availability of an antenna and cost for establishing the communications. When there are multiple earth stations involved, this becomes a very elaborate and tedious exercise. Such a procedure may be automated by software that enables the link system to tell the earth station computers that it will need to establish communications through a specific ground antenna at a certain time. The earth station computer will then notify the spacecraft link system if this is possible. The decision is taken based on traffic conditions, availability of antenna, spectrum bandwidth etc. In almost all cases to date, such negotiation happens manually through human exchange. A link system as disclosed herein enables automating such negotiation.

As is evident from the above, a difference between the disclosure herein and existing spacecraft configurations is the fact that the link system 100 connects directly to the spacecraft communication bus(es) and, in doing so, it allows direct communication with any of the subsystems 12 in the spacecraft 10. Moreover, expanding further on the differences with respect to existing spacecraft configurations, connectivity intelligence is no longer integrated only in the on-board-computer 102 but also in the link system 100. This allows the network (i.e. external entities 150, 160) to adapt and modernise by programming new communication protocols in the link system 100. The connectivity intelligence integrated in the link system 100 also allows it to serve each of the spacecraft subsystems 12 as if they were separate entities, by directly addressing them from any node (i.e. external entities 150, 160).

In simplified terms, the arrangements and methods described herein removes some of the intelligence from the on-board-computer 102 and moves it to the link system 100. This helps make the spacecraft a lot more resilient in terms of communicating with the ground or with other spacecraft (i.e. external entities 150, 160).

## Claims

1. A link system (100) for a spacecraft (10), the spacecraft (10) comprising:
- a plurality of subsystems (12) interconnected with each other,
- an on-board computer (102) configured to communicate with the subsystems (12) and to at least convey data between the subsystems (12) and the link system (100), and
- a wireless communication system (116) configured to communicate data between the spacecraft (10) and at least one external entity (150, 160),
wherein the link system (100) comprises control and communication circuitry and configured to:
- communicate with the subsystems (12) independent of the on-board computer (102) and configured to manage communication between the subsystems (12) and the external entity (150, 160) via the wireless communication system (116),
- determine that an anomaly has occurred in functionality of the on-board computer (102) and/or in functionality of at least one subsystem among the plurality of subsystems (12), and
- as a consequence of the determination that an anomaly has occurred, initiating a recovery procedure that comprises enabling the external entity (150, 160) to perform recovery actions in relation to the on-board computer (102) and/or in relation to at least one subsystem among the plurality of subsystems (12).

2. The link system (100) of claim 1, configured such that:
- the determination that an anomaly has occurred comprises receiving, from the external entity (150, 160), information that the anomaly has occurred.

3. The link system (100) of claim 1, configured such that:
- the determination that an anomaly has occurred comprises detecting that the anomaly has occurred.

4. The link system (100) of any of claims 1 to 3, configured such that:
- the determination that an anomaly has occurred comprises determining that a limitation of the on-board computer (102) to communicate with at least one subsystem among the plurality of subsystems (12) has occurred.

5. The link system (100) of any of claims 1 to 4, configured such that:
- the determination that an anomaly has occurred comprises determining that a limitation of the on-board computer (102) to execute a scheduled management task associated with at least one subsystem among the plurality of subsystems (12) has occurred.

6. The link system (100) of any of claims 1 to 5, configured such that the recovery procedure initiated by the link system (100) comprises:
- storing anomaly information pertaining to the anomaly in functionality of the on-board computer (102), and
- transmitting the anomaly information to the external entity (150, 160).

7. The link system (100) of any of claims 1 to 6, configured such that the recovery procedure initiated by the link system (100) comprises:
- receiving, from the external entity (150, 160), at least one command to execute a restart procedure of the on-board computer (102), and
- executing a restart procedure of the on-board computer (102) according to the received at least one command.

8. The link system (100) of any of claims 1 to 7, configured such that the recovery procedure initiated by the link system (100) comprises:
- enabling direct communication between the external entity (150, 160) and at least one subsystem among the plurality of subsystems (12).

9. The link system (100) of claim 8, configured such that the enabling of direct communication between the external entity (150, 160) and at least one subsystem among the plurality of subsystems (12) comprises:
- establishing a communication channel (120) between the link system (100) and the at least one subsystem among the plurality of subsystems (12),
- transmitting, to the external entity (150, 160), information configured to enable the external entity (150, 160) to obtain access to the established channel (120) and thereby enabling the external entity (150, 160) to communicate with the at least one subsystem among the plurality of subsystems (12) via the channel (120).

10. The link system (100) of any of claims 1 to 9, configured such that the recovery procedure initiated by the link system (100) comprises:
- receiving, from the external entity (150, 160), a request for telemetry data from at least one subsystem among the plurality of subsystems (12),
- obtaining, from the at least one subsystem among the plurality of subsystems (12), telemetry data, and
- transmitting, to the external entity (150, 160), the obtained telemetry data.

11. The link system (100) of any of claims 1 to 10, where:
- the wireless communication system (116) is configured to communicate with at least one external entity in the form of a ground station (150) in a fixed-satellite service system, FSS.

12. The link system (100) of any of claims 1 to 11, where:
- the wireless communication system (116) is configured to communicate with at least one external entity in the form of another spacecraft (160) in an inter-satellite service system, ISS.

13. A method performed by a link system (100) for a spacecraft (10), the spacecraft (10) comprising a plurality of subsystems (12) interconnected with each other, an on-board computer (102) configured to communicate with the subsystems (12) and to at least convey data between the subsystems (12) and the link system (100), and a wireless communication system (116) configured to communicate data between the spacecraft (10) and at least one external entity (150, 160), wherein the link system (100) comprises control and communication circuitry that performs the steps of:
- determining (210) that an anomaly has occurred in functionality of the on-board computer (102) and/or in functionality of at least one subsystem among the plurality of subsystems (12), and
- as a consequence of the determination that an anomaly has occurred, initiating (212) a recovery procedure that comprises enabling the external entity (150, 160) to perform recovery actions in relation to the on-board computer (102) and/or at least one subsystem among the plurality of subsystems (12).

14. A computer program (343) comprising instructions which, when executed on at least one processor (302) in a spacecraft link system (100), cause the system (100) to carry out the method according to any one of claims 1 to 12.

15. A carrier (342), comprising the computer program (343) of claim 14, wherein the carrier is one of an electronic signal, an optical signal, a radio signal and a computer readable storage medium.
